# EUROPÄISCHE PATENTSCHRIFT

(11) **EP 1 666 553 B1**
(45) Veröffentlichungstag und Bekanntmachung des Hinweises auf die Patenterteilung: **17.02.2010**
(21) Anmeldenummer: 05026209.6
(22) Anmeldetag: 01.12.2005
(51) Int. Cl.: C09J 5/02, C08J 7/04

(54) **Verfahren zum Aufbringen von Primern**
Method for applying primers
Procédé d'application de primaires

(30) Priorität: 01.12.2004 DE 102004057990
(43) Veröffentlichungstag der Anmeldung: 07.06.2006
(73) Patentinhaber: Klebchemie M.G. Becker GmbH & Co. KG, 76356 Weingarten/Baden (DE)
(72) Erfinder: Ehrmann, Elke, 76227 Karlsruhe (DE); Becker-Weimann, Klaus, 76227 Karlsruhe (DE); Weller, Martin, Dr., 76185 Karlsruhe (DE)
(74) Vertreter: Isenbruck, Günter

(56) Entgegenhaltungen:
- EP-A- 1 148 084
- WO-A-2004/099333
- DE-A1- 4 408 487
- DE-A1- 4 428 382

## Beschreibung

Die vorliegende Erfindung betrifft ein Verfahren zum Aufbringen eines wässrigen Primers zur Verklebungsvorbereitung auf die Kunststoffoberfläche eines Gegenstandes.

Die Verklebung von Gegenständen ist - insbesondere im industriellen Bereich - ein Prozess, der genau zu führen ist, um adäquate Verklebungsergebnisse zu erzielen. Für ein gutes Verklebungsergebnis ist sicherzustellen, dass eine gleichmäßige und dauerhafte Verklebung erfolgt. Im Regelfall vieler Anwendungen, etwa bei der Verklebung von Kunststoffen miteinander, wie bei Fensterprofilen, auf welche Schutz- und/oder Zierfolien aufzukleben sind, muss zunächst der Untergrund vorbehandelt werden, um gute Verklebungsergebnisse zu erzielen. Dafür wird ein Material (Primer) aufgetragen, welches dafür sorgt, dass sich der später aufzutragende Klebstoff mit dem Kunststoffträger des Grundkörpers innig verbindet. Der Primer dient somit zur Haftvermittlung durch Einwirkung auf die Oberfläche des zu verklebenden Gegenstandes.

So hindern bei der Verklebung von Kunststoffen häufig darin enthaltene Zusatzstoffe, wie Gleitmittel, die Klebmittelhaftung. Gleitmittel spielen bei der Kunststoffherstellung eine wichtige Rolle und bestehen beispielsweise aus Montanwachs, Fettsäureestern, Chlorparaffinen oder Erdalkaliseifen.

Üblicherweise wird eine Primerschicht von etwa 1-30 µm aufgetragen. Dies kann zum Beispiel dadurch geschehen, dass der Gegenstand auf einer Förderbahn an einer Auftragevorrichtung wie einem Wischfilz entlang bewegt wird.

Der Primer enthält häufig ein Polyesterharz, das in leichtflüchtigen, organischen Lösemitteln wie Dichlormethan gelöst ist. Die Verwendung von Primern, die auf leichtflüchtige, organische Lösemittel basieren, ist jedoch in zunehmendem Maß aus verschiedenen Gründen unerwünscht. So ist beispielsweise das Entfernen des in der Luft befindlichen gasförmigen Lösemittels kostspielig.

WO-A 2004/099333 beschreibt Verfahren zur Verklebungsvorbereitung, wobei Primer als Mittel zur Vorbereitung der Verklebung aufgetragen werden können.

Wasserbasierte Primer, wie sie beispielsweise in DE-A 44 28 382 offenbart sind, vermeiden die oben beschriebenen Probleme, haben jedoch häufig den Nachteil, dass in herkömmlichen Anlagen zwischen Auftragung des Primers und Verklebung die Einwirkzeit zu gering ist und/oder es so viel Material aufgetragen werden muss, dass auf Grund der geringen Dampfdrücke keine ausreichende Trocknung des Primers erfolgen kann.

In DE-A 44 28 382 wird das Problem der Trocknung dadurch gelöst, dass dem aufgetragenen Primer auf der zu bindenden Oberfläche warme Luft von 60 bis 100°C zugeführt wird oder dass Infrarotstrahlung verwendet wird. Eine verbesserte Haftvermittlung kann hierdurch jedoch nicht erreicht werden.

Es besteht daher ein Bedarf, weitere Verfahren zum Aufbringen von wässrigen Primem zu entwickeln, die insbesondere eine erhöhte Haftvermittlung bewirken.

Die Aufgabe der vorliegenden Erfindung ist somit die Bereitstellung verbesserter Verfahren zum Aufbringen von Primern.

Dementsprechend umfasst das erfindungsgemäße Verfahren das Aufbringen eines wässrigen Primers zur Verklebungsvorbereitung auf die Kunststoffoberfläche eines Gegenstandes, wobei das in Kontakt bringen von wässrigem Primer und Oberfläche dadurch gekennzeichnet ist, dass der Primer um mehr als 20°C gegenüber der Umgegbungstemperatur und auf mindestens 75°C erwärmt ist.

Es wurde nämlich gefunden, dass die Haftvermittlung des wässrigen Primers erhöht sein kann, wenn beim Kontakt des Primers mit der Kunststoffoberfläche dieser oder beide bereits erwärmt sind.

Es wurde weiterhin gefunden, dass überraschenderweise besonders gute Ergebnisse erzielt werden können, wenn Kunststoffoberfläche und Primer verschiedene Temperaturen vor in Kontakt bringen aufweisen und zumindest die Temperatur des Primers erhöht ist, also der Primer und optional die Kunststoffoberfläche erwärmt wurde.

Vorzugsweise beträgt die Temperaturdifferenz mindestens 10°C, besonders bevorzugt mindestens 25°C und am meisten bevorzugt mindestens 50°C.

Eine geeignete Temperatur für den Primer beträgt mindestens 75°C, vorzugsweise mindestens 80°C, besonders bevorzugt mindestens 85°C und am meisten bevorzugt mindestens 90°C. Die Obergrenze wird hier lediglich durch den Siedepunkt des wässrigen Primers gebildet.

Insbesondere durch die Wahl unterschiedlicher Temperaturen für den Primer und die Kunststoffoberfläche ist es möglich, für die Kunststoffoberfläche Temperaturen über 100°C auszuwählen. Dementsprechend beträgt die Temperatur der Kunststoffoberfläche zumindest für die äußerste Grenzschicht vorzugsweise mehr als 100°C, besonders bevorzugt mindestens 125°C und am meisten bevorzugt mindestens 150°C.

Im Rahmen der vorliegenden Erfindung gelten Primer oder Kunststoffoberfläche dann als erwärmt, wenn ihre Temperatur um mehr als 20°C, vorzugsweise um mehr als 25°C von der Umgebungstemperatur abweichen. Vorzugsweise wird von einer Umgebungstemperatur von 20°C ausgegangen. Somit gilt im Rahmen der vorliegenden Erfindung ein erwärmter Zustand dann als gegeben, wenn bei einer üblichen Raumtemperatur von . 20°C der Primer oder die Kunststoffoberfläche eine Temperatur von größer 40°C, vorzugsweise größer 45°C aufweisen.

Nach Inkontaktbringen des Primers kann dieser getrocknet werden. Dies kann beispielsweise durch einfaches Stehen lassen oder durch Zufuhr warmer Luft geschehen.

Die Kunststoffoberfläche des zu primernden Gegenstandes besteht typischerweise aus Thermoplasten, wie beispielsweise Polyethylen, Polypropylen, Polybutylen, Polyvinylchlorid (PVC), Polyacrylaten oder Polymethacrylate, oder Mischungen hiervon. Vorzugsweise enthält die Kunststoffoberfläche PVC oder Polypropylen. Insbesondere ist bevorzugt, wenn diese nur aus PVC oder Polypropylen besteht.

Geeignete Gegenstände sind insbesondere lang gestreckte profilierte Gegenstände wie Fensterprofile.

Der Primer kann mit der Kunststoffoberfläche auf verschiedene Arten in Kontakt gebracht werden. Vorteilhafterweise geschieht dies durch Aufbringen des wässrigen Primers mittels bekannter Techniken, wie Sprühen, Gießen, Pinseln, Walzen oder Tauchen. Üblicherweise beträgt die Schichtdicke des Primers im nicht getrockneten Zustand bis etwa 200 µm. Nach Trocknung bis etwa 30µm.

Wässrige Primer sind dem Fachmann geläufig. DE-A 4428382 offenbart beispielsweise wässrige Primer, die auf einer Dispersion aus mindestens einem chlorierten Polyolefin und mindestens einem wasseremulgierbaren Isocyanat basieren.

Typischerweise besitzen wässrige Primer einen Wassergehalt von mindestens 50 Gew.-%.

Weitere wässrige Primer beinhalten neben Wasser als Hauptkomponente Dispersionen von Polyurethanen (PU), Polyestern und Acrylaten oder Mischungen hiervon. Hierbei sind Primer mit PU- oder Polyester Dispersionen bevorzugt.

Das erfindungsgemäße Verfahren ist besonders geeignet, wenn das in Kontakt bringen des Primers zur Vorbereitung der Verklebung einer Folie dient. Jedoch kann auch ein beliebig andersartiger Gegenstand in Bezug auf Material und Form zur Verklebung eingesetzt werden. Insbesondere handelt es sich bevorzugt um Kunststoffmaterialien oder um Materialien, die eine Kunststoffoberfläche besitzen.

Vorzugsweise erfolgt die Gegenstandsverklebung durch flächiges Aufbringen des Klebstoffes auf die geprimerte Kunststoffoberfläche. Anschließend wird der aufzubringende Gegenstand mit dem Klebstoff in Kontakt gebracht. Alternativ kann der Klebstoff auch auf beide Gegenstände aufgebracht werden.

Bei der flächigen Verklebung ist es wichtig, dass eine über die Fläche hinreichend gleichmäßige und konstante Verklebung erreicht wird, was sich insbesondere in guten Verklebungsergebnissen niederschlägt.

Die flächige Verklebung kann vorzugsweise als Ummantelung, d.h. ganz oder teilweise umhüllt, oder als Folierung eines Trägers mit einer vergleichsweise dünnen Folie erfolgen. Vorzugsweise beträgt die Foliendicke hierbei 20 bis 400 µm. Hier wird typischerweise der dickere Träger nach dem erfindungsgemäßen Verfahren vorbereitet und dann nach aufbringen eines Klebstoffes von der Folie ummantelt. Wie oben bereits ausgeführt kann es sich bei der Ummantelung auch um PVC-Profile handeln, wie sie im Fassadenbau, bei Fenstern oder Fensterbänken und dergleichen üblich sind.

Die Verklebung und die Vorbereitung der Verklebung liefern auch dann gute Ergebnisse, wenn der Gegenstand entsprechend profiliert ist und gegebenenfalls sogar bereits durch Koextrusion gebildete Gegenstände vorbereitet werden. So können Dichtlippen und dergleichen in einem später zu ummantelnden Profil vorgesehen werden und auch bei solchen komplex geformten Gegenständen liefert das erfindungsgemäße Verfahren gute Ergebnisse.

Die zu verklebende Oberfläche des aufzubringenden Gegenstands, wie etwa eine Folie, besteht vorzugsweise ebenfalls aus Kunststoff, wie beispielsweise PVC, Polyacrylat oder Polyester. Insbesondere bei der Folienummantelung kann die zu verklebende Folienoberfläche auch aus einem Holzfurnier bestehen.

Der nach dem Verklebungsvorbereitungsschritt aufgebrachte Klebstoff kann ein lösemittelhaltiger Klebstoff (beispielsweise auf Polyesterbasis) sein, vorzugsweise ist dieser jedoch lösemittelfrei, so dass sowohl der Vorbereitungsschritt als auch der Klebevorgang ohne organische Lösemittel, beziehungsweise nur auf Wasserbasis, durchgeführt werden können, was ein weiterer Vorteil der vorliegenden Erfindung ist.

Vorzugsweise wird der Klebstoff in einer Stärke von 10 bis 150 µm nach bekannten Methoden aufgebracht.

Vorzugsweise handelt es sich dabei um einen Klebstoff auf Polyurethan- (PUR-) Basis, insbesondere um reaktive PUR-Schmelzklebstoffe wie sie beispielsweise als Kleiberit® PUR SK Serie vertrieben werden.

Insbesondere wenn es sich bei dem Klebstoff um einen PUR-Schmelzklebstoff handelt, wird dieser vorzugsweise bei einer Temperatur von mindestens 100°C, vorzugsweise ca. 120°C aufgebracht.

Die vorliegende Erfindung wird anhand des nachfolgenden Beispiels näher erläutert.

### Beispiel

Zur Bestimmung einer gesteigerten Haftvermittlung wird eine Schälfestigkeitsprüfung gemäß RAL 716.1 unter unterschiedlichen Bedingungen durchgeführt.

Hierbei wird ein Primer auf eine Kunststoffoberfläche unter Variieren der Temperatur von Primer bzw. Kunststoffoberfläche aufgebracht. Bei dem Primer handelt es sich um wasserbasierte Primer mit einer PU-Dispersion (VP 9102/194 und VP 9102/199) sowie um einen wässrigen Primer eine Polyester-Disersion enthaltend (VP9102/193b). Bei dem Kunststoff handelte es sich um ein PVC-Fensterprofil.

Nach Abkühlen wurde ein PUR Heißkleber bei ca. 120°C aufgebracht und anschließend eine zweischichtige Folie aufgebracht, bei der die zu verklebende Oberfläche aus PVC besteht.

Nach einer Stunde werden ca. 20 mm breite Folienstreifen von der Kunststoffoberfläche "abgeschält" und die dafür notwendige Kraft pro Längeneinheit (Schälwert) bestimmt.

Je höher der Wert ist, desto größer ist die Schälfestigkeit und desto stärker ist die erreichte Haftvermittlung durch den Primer.

Die Tabelle zeigt die entsprechenden Schälwerte unter folgenden Bedingungen:
A: Nicht erwärmter Primer (24°C) auf nicht erwärmter Kunststoffoberfläche (40°C);
B: Erwärmter Primer (90°C) auf nicht erwärmter Kunststoffoberfläche (40°C).

| | Schälwert in N/mm nach 48 h | |
|---|---|---|
| Versuchsprodukt | A | B |
| VP 9102/194 | 0,74 | 1,47 |
| VP 9102/199 | 0,98 | 2,45 |
| VP 9102/193b | 0 | 2,8 |

Aus der Tabelle ist zu entnehmen, dass gegenüber dem Stand der Technik (Situation A) verbesserte Schälwerte erhalten werden.

## Patentansprüche

1. Verfahren zum Aufbringen eines wässrigen Primers zur Verklebungsvorbereitung auf die Kunststoffoberfläche eines Gegenstandes umfassend das in Kontakt bringen von wässrigem Primer und Oberfläche, **dadurch gekennzeichnet, dass** der Primer um mehr als 20°C gegenüber der Umgebungstemperatur und auf mindestens 75°C erwärmt ist.

2. Verfahren nach Anspruch 1, **dadurch gekennzeichnet, dass** zusätzlich die Oberfläche um mehr als 20°C gegenüber der Umgebungstemperatur erwärmt ist.

3. Verfahren nach Anspruch 1 oder 2, **dadurch gekennzeichnet, dass** die Kunststoffoberfläche auf über 100°C erwärmt ist.

4. Verfahren nach einem der Ansprüche 1 bis 3, **dadurch gekennzeichnet, dass** die Kunststoffoberfläche aus Polyvinylchlorid oder Polypropylen besteht.

5. Verfahren nach einem der Ansprüche 1 bis 4, **dadurch gekennzeichnet, dass** der wässrige Primer PU- oder Polyester Dispersionen enthält.

6. Verfahren nach einem der Ansprüche 1 bis 5, **dadurch gekennzeichnet, dass** der Gegenstand ein lang gestreckter profilierter Gegenstand ist.

7. Verfahren zum Verkleben einer Folie die Schritte enthaltend:
a) Aufbringen eines wässrigen Primers zur Verklebungsvorbereitung nach einem Verfahren gemäß einem der Ansprüche 1 bis 6 und
b) Verkleben der Folie.

8. Verfahren nach Anspruch 7, **dadurch gekennzeichnet, dass** zur Verklebung ein Polyurethan-Kleber verwendet wird.

9. Verfahren nach Anspruch 7 oder 8, **dadurch gekennzeichnet, dass** die zu verklebende Oberfläche der Folie PVC, Polyacrylat, Polyester oder ein Holzfurnier enthält.

10. Verfahren nach einem der Ansprüche 7 bis 9, **dadurch gekennzeichnet, dass** die Folie den Gegenstand ummantelt.

## Claims

1. Method of applying an aqueous primer, for preparation for adhesive bonding, to the plastics surface of an article, comprising the contacting of aqueous primer and surface, **characterized in that** the primer is heated by more than 20°C relative to the ambient temperature, and to at least 75°C.

2. Method according to Claim 1, **characterized in that** additionally the surface is heated by more than 20°C relative to the ambient temperature.

3. Method according to Claim 1 or 2, **characterized in that** the plastics surface is heated to above 100°C.

4. Method according to any of Claims 1 to 3, **characterized in that** the plastics surface is composed of polyvinyl chloride or polypropylene.

5. Method according to any of Claims 1 to 4, **characterized in that** the aqueous primer comprises PU or polyester dispersions.

6. Method according to any of Claims 1 to 5, **characterized in that** the article is an elongated profiled article.

7. Method of adhesively bonding a foil, comprising the steps of:
a) applying an aqueous primer, for preparation for adhesive bonding, by a method according to any of Claims 1 to 6, and
b) adhesively bonding the foil.

8. Method according to Claim 7, **characterized in that** adhesive bonding is carried out using a polyurethane adhesive.

9. Method according to Claim 7 or 8, **characterized in that** the surface of the foil to be bonded comprises PVC, polyacrylate, polyester or a wood veneer.

10. Method according to any of Claims 7 to 9, **characterized in that** the foil wraps the article.

## Revendications

1. Procédé pour appliquer un apprêt aqueux pour la préparation au collage sur la surface en matériau synthétique d'un objet comprenant la mise en contact de l'apprêt aqueux et de la surface, **caractérisé en ce que** l'apprêt est chauffé à plus de 20°C au-dessus de la température ambiante et à au moins 75°C.

2. Procédé selon la revendication 1, **caractérisé en ce qu'**en outre, la surface est chauffée à plus de 20°C au-dessus de la température ambiante.

3. Procédé selon la revendication 1 ou 2, **caractérisé en ce que** la surface en matériau synthétique est chauffée à plus de 100°C.

4. Procédé selon l'une quelconque des revendications 1 à 3, **caractérisé en ce que** la surface en matériau synthétique est en poly(chlorure de vinyle) ou en polypropylène.

5. Procédé selon l'une quelconque des revendications 1 à 4, **caractérisé en ce que** l'apprêt aqueux contient des dispersions de PU ou de polyester.

6. Procédé selon l'une quelconque des revendications 1 à 5, **caractérisé en ce que** l'objet est un objet long, allongé, profilé.

7. Procédé pour le collage d'une feuille, contenant les étampes :
a) application d'un apprêt aqueux pour la préparation au collage selon l'une quelconque des revendications 1 à 6 et
b) collage de la feuille.

8. Procédé selon la revendication 7, **caractérisé en ce qu'**on utilise un adhésif à base de polyuréthane pour le collage.

9. Procédé selon la revendication 7 ou 8, **caractérisé en ce que** la surface à coller de la feuille contient du PVC, du polyacrylate, du polyester ou un placage en bois.

10. Procédé selon l'une quelconque des revendications 7 à 9, **caractérisé en ce que** la feuille entoure l'objet.
